Europäisches Patentamt

European Patent Office

Office européen des brevets

(11) Veröffentlichungsnummer: **0 271 162**

**A1**

(12) **EUROPÄISCHE PATENTANMELDUNG**

(21) Anmeldenummer: 87202435.1

(22) Anmeldetag: 07.12.87

(51) Int. Cl.⁴: **B26B 19/28**

(30) Priorität: 09.12.86 DE 3641979

(43) Veröffentlichungstag der Anmeldung:
15.06.88 Patentblatt 88/24

(84) Benannte Vertragsstaaten:
AT CH DE ES FR GB LI

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **CH ES FR GB LI AT**

(72) Erfinder: **Bertram, Leo**
**Am Sender**
**D-5190 Stolberg(DE)**
Erfinder: **Bolte, Ekkehard, Dr.-Ing.**
**Klauserstrasse 73**
**D-5100 Aachen(DE)**
Erfinder: **Hörster, Horst, Dr.**
**Vogelsangstrasse 11**
**D-5106 Roetgen(DE)**
Erfinder: **Schemmann, Hugo, Dr.**
**Zwartebergweg 6**
**NL-6371 XD Schaesberg(NL)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Kleines elektrisches Haushaltsgerät.**

(57) Die Erfindung bezieht sich auf ein kleines elektrisches Haushalsgerät (1), insbesondere ein Trockenrasierapparat, mit einem Antriebsmotor (3) und mit einer den Antriebsmotor (3) versorgenden, aufladbaren Speicherbatterie (7), die aufladbar ist mittels Solarzellen (11), die an dem Apparatagehäuse (1) angeordnet sind. Zusätzlich zur Solarzellenladung ist ein Ladegerät (19) zur Aufladung der Speicherbatterie (7) anschaltbar. Die Solarzellenfläche und damit ihr Ladevermögen in Verbindung mit der Speicherkapazität der wiederaufladbaren Batterie (7) sind so aufeinander abgestimmt, daß auch bei ungünstigen Beleuchtungsbedingungen bei normalem Rasierbetrieb die Zahl der möglichen Rasuren zwischen zwei externen Ladevorgängen etwa verdoppelt ist.

## Kleines elektrisches Haushaltsgerät

Die Erfindung bezieht sich auf ein kleines elektrisches Haushaltsgerät, insbesondere ein Trockenrasierapparat, mit einem Antriebsmotor und mit einer den Antriebsmotor versorgenden, aufladbaren Speicherbatterie, die aufladbar ist mittels Solarzellen, die an dem Apparategehäuse angeordnet sind, und eines zusätzlich zu den Solarzellen vorgesehenen Ladegerätes.

Derartige kleine elektrische Haushaltsgeräte, insbesondere Elektrotrockenrasierapparate, sind bekannt. Bei einer bekannten Ausführungsform derartiger Trockenrasierapparate wird ein mechanisch mit Bürsten kommutierter Gleichstrommotor von einer Speicherbatterie, die beispielsweise aus zwei wieder-aufladbaren Akkumulatorzellen besteht, gespeist. Über ein Getriebe werden die Messer des Trockenrasierapparates von dem Gleichstrommotor angetrieben. Die Beschränkung auf zwei Akkumulatorzellen mit einer Gesamtspannung von 2,4 V ergibt sich aus räumlichen und wirtschaftlichen Gründen. Von großer Bedeutung ist bei derartig wieder-aufladbaren Geräten, daß der Wirkungsgrad der elektromechanischen Energieumwandlung möglichst groß ist, um mit einer Akkumulatorladung eine lange Betriebszeit bzw. eine möglichst große Zahl von Rasiervorgängen zu ermöglichen.

Es ist aus der DE-OS 32 45 363 bekannt, die Akkumulatorzellen in einem Trockenrasierapparat unabhängig von einem vorhandenen elektrischen Stromversorgungsnetz mittels Solarzellen aufzuladen. Die Solarzellen werden dazu auf Außenflächen des Apparategehäuses aufgebracht und laden die Akkumulatorzellen während der Nicht-Benutzung und gegebenenfalls auch während der Benutzung auf oder nach. Es hat sich gezeigt, daß im praktischen Betrieb über das ganze Jahr in gemäßigten Zonen die Aufladeleistung von Solarzellen, welche eine Fläche in der Größenordnung einer Gehäuseseitenwand bedecken, im allgemeinen nicht ausreicht, um die Akkumulatorzellen in den Zeiten zwischen zwei Rasuren wieder genügend nachzuladen. Aus dem JP-GM 60-137 976 ist es bekannt, die Akkumulatorzellen zusätzlich mittels eines Ladegerätes aufzuladen. Das Ladegerät ist von außen anschaltbar.

Mechanische Kommutierungseinrichtungen an kommutierbaren Gleichstrommotoren sind ungünstig hinsichtlich des Verschleißes, der Lebensdauer, der Toleranzen, der Abmessungen und des Geräusches während des Betriebs. Auch führen sie zu elektrischen Störungen. Die Nachteile von mechanischen Kommutierungsrichtungen lassen sich vermeiden durch den Einsatz von elektronisch kommutierten Motoren, die beispielsweise aus der Audio-Technik bekannt sind. In diesem Fall wird mit Hilfe von Transistoren oder anderen elektronischen Schaltelementen eine zur Verfügung gestellte Gleichspannung in eine Spannung mit einem Wechselanteil umgerichtet, und zwar derart, daß ein Motorbetrieb mit Eigenschaften möglich ist, die denen eines mechanisch kommutierten Motors gleichen oder diesem gegenüber zusätzliche Vorteile aufweisen.

Elektronische Kommutierungen haben jedoch größere Verluste als mechanische Kommutierungen. Bei niedrigen Betriebsspannungen von beispielsweise 2,4 V sinkt dann der Wirkungsgrad der Energieumwandlung von elektrischer in mechanische Energie beträchtlich ab. Bei Trockenrasierapparaten hat das zur Folge, daß die Anzahl der möglichen Rasiervorgänge mit einer Batterieladung zurückgeht. Dieser verminderte Wirkungsgrad macht elektronisch kommutierte Gleichstrommotoren für Trockenrasierapparate mit aufladbarer Speicherbatterie praktisch unbrauchbar.

Es ist Aufgabe der Erfindung, ein kleines elektrisches Haushaltsgerät der eingangs erwähnten Art zu schaffen, bei dem der Antriebsmotor auch einen größeren Energiebedarf aufweisen kann und die Betriebsdauer bzw. die Häufigkeit der möglichen Benutzungszyklen gleich oder etwa gleich ist den Geräten mit mechanischer Kommutierung.

Die gestellte Aufgabe ist erfindungsgemäß dadurch gelöst, daß die Solarzellenfläche und damit ihr Ladevermögen in Verbindung mit der Speicherkapazität der wiederaufladbaren Batterie so aufeinander abgestimmt sind, daß auch bei ungünstigen Beleuchtungsbedingungen bei normalem Rasierbetrieb die Zahl der möglichen Rasuren zwischen zwei externen Ladevorgängen etwa verdoppelt ist.

Das Ladegerät lädt damit wie üblich die Akkumatorenzellen auf, und die Solarzellen liefern eine gewisse Zuladung, die den jeweiligen Ladezyklus verlängert. Dies ist bedeutsam, wenn ein Gerät nur in größeren Zeitabständen an eine Netzspannung angeschlossen werden kann.

Nach einer weiteren Ausgestaltung der Erfindung ist vorgesehen, daß der Antriebsmotor ein elektronisch kommutierter Gleichstrommotor ist.

Nach einer weiteren Ausgestaltung der Erfindung ist vorgesehen, daß eine Anzeigevorrichtung für die erforderliche Nachladung vorgesehen ist. Aus dieser Anzeige läßt sich entnehmen, daß nachgeladen werden muß. Unabhängig davon, welcher Antriebsmotor benötigt wird, kann das Herangehen an das Ladegerät gegenüber herkömmlichen netzgeladenen Akku-Geräten jeweils um mehrere Benutzungszyklen hinausgeschoben werden. Die Nachlade-Unabhängigkeit wird damit bei mit Solarzellen aufladbaren kleinen elektrischen Haushaltsgeräte vergrößert.

Das Nachladen kann nach einer weiteren Ausgestaltung der Erfindung dadurch erfolgen, daß ein Netzladegerät in das Gehäuse des Haushaltsgeräts eingebaut ist. Ebenso ist es aber möglich, daß das zusätzliche Ladegerät ein von außen anschaltbarer Solargenerator ist.

Eine Verlängerung des Zeitraumes, in dem nicht nachgeladen werden muiß, ist von Vorteil. Nach einer weiteren Ausgestaltung der Erfindung ist deshalb vorgesehen, daß das Gerät derart bemessen ist, daß eine Nachladung nur alle Monate erforderlich ist.

Als Speicherbatterie kommt nach einer weiteren Aussgestaltung der Erfindung vorzugsweise eine Batterie mit einer Batteriespannung von 1,2 V in Betracht.

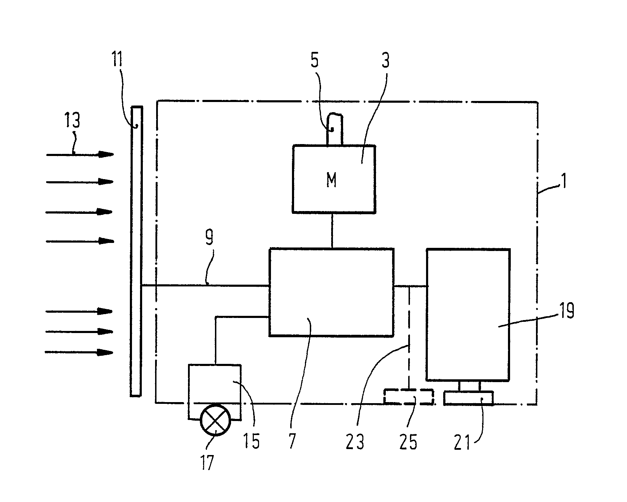

Die Erfindung wird anhand des in der Zeichnung dargestellten Ausführungsbeispieles näher erläutert.

Die Zeichnung zeigt schematisch, durch eine strichpunktierte Linie 1 angedeutet, das Gehäuse eines kleinen elektrischen Haushaltsgerätes, beispielsweise eines elektrischen Trockenrasierapparates. In diesem Gehäuse 1 ist ein Motor 3 angeordnet, dessen Welle 5 ein nicht dargestelltes Arbeitsteil, beispielsweise das Messer eines Trockenrasierapparates, antreiben kann. Elektrisch verbunden mit dem Gleichstrommotor 3 ist eine Speicherbatterie 7, die beispielsweise aus zwei wiederaufladbaren Akkumulatorzellen besteht. Zur Verkleinerung des Gehäuses kann es aber auch zweckmäßig sein, mit einer Akku-Zelle von 1,2 V auszukommen. Zur Aufladung dieser Speicherbatterie dient eine über eine Leitung 9 angeschlossene, mit Solarzellen bestückte Platte 11, die von dem Licht der Umgebung angestrahlt werden kann, wie durch Pfeile 13 angedeutet ist.

Mit der Speicherbatterie 7 ist eine Ladeanzeigevorrichtung 15 verbunden, deren Lampe 17 sich ebenfalls außerhalb des durch die strichpunktierte Linie 1 angedeuteten Gehäuses befindet.

Eine zusätzliche Lademöglichkeit der Speicherbatterie 7 bietet ein Netzladegerät 19, das über einen Steckerkontakt 21 an das Netz anschaltbar ist. Gestrichelt ist eine weitere Leitung 23 mit Steckerkontakt 25 angedeutet. Diese Teile 23 und 25 können an die Stelle des Netzladegerätes 19 mit dem Steckerkontakt 21 treten. In diesem Fall wird über den Steckerkontakt 25 ein Netzladegerät an das kleine Haushaltsgerät angeschlossen.

## Ansprüche

1. Kleines elektrisches Haushaltsgerät (1), insbesondere ein Trockenrasierapparat, mit einem Antriebsmotor (3) und mit einer den Antriebsmotor (3) versorgenden, aufladbaren Speicherbatterie (7), die aufladbar ist mittels Solarzellen (11), die an dem Apparategehäuse (1) angeordnet sind, und eines zusätzlich zu diesen Solarzellen vorgesehenen Ladegerätes, dadurch gekennzeichnet, daß die Solarzellenfläche und damit ihr Ladevermögen in Verbindung mit der Speicherkapazität der wiederaufladbaren Batterie (7) so aufeinander abgestimmt sind, daß auch bei ungünstigen Beleuchtungsbedingungen bei normalem Rasierbetrieb die Zahl der möglichen Rasuren zwischen zwei externen Ladevorgängen etwa verdoppelt ist.

2. Kleines elektrisches Haushaltsgerät nach Anspruch 1, dadurch gekennzeichnet, daß der Antriebsmotor (3) ein elektronisch kommutierter Gleichstrommotor ist.

3. Kleines elektrisches Haushaltsgerät nach den Ansprüchen 1 und 2, dadurch gekennzeichnet, daß eine Anzeigevorrichtung (15) für erforderliche Nachladung vorgesehen ist.

4. Kleines elektrisches Haushaltsgerät nach Anspruch 1, dadurch gekennzeichnet, daß ein Netzladegerät (19) in das Gehäuse (1) des Haushaltsgerätes eingebaut ist.

5. Kleines elektrisches Haushaltsgerät nach Anspruch 1, dadurch gekennzeichnet, daß das zusätzliche Ladegerät ein von außen anschaltbarer Solargenerator ist.

6. Kleines elektrisches Haushaltsgerät nach einem oder mehreren der Ansprüche 1 bis 5, dadurch gekennzeichnet, daß das Gerät derart bemessen ist, daß eine Nachladung nur alle Monate erforderlich ist.

7. Kleines elektrisches Haushaltsgerät nach einem oder mehreren der Ansprüche 1 bis 6, dadurch gekennzeichnet, daß die Speicherbatterie (7) aus einer wiederaufladbaren Akkumulatorzelle von 1,2 V besteht.

**Europäisches Patentamt**

# EUROPÄISCHER RECHERCHENBERICHT

| | EINSCHLÄGIGE DOKUMENTE | | EP 87202435.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | <u>DE - A - 3 245 363</u> (PASCHEK)<br>* Anspruch 1 *<br><br>-- | 1 | B 26 B 19/28 |
| A | AT - B - 262 837 (N.V. PHILIPS' <u>GLOEILAMPENFABRIEKEN</u>)<br>* Seite 2, Zeilen 12-26 *<br><br>-- | 1,3,5 | |
| A | <u>AT - B - 299 744</u> (GEVTERT)<br>* Seite 3, Zeilen 8-12; Fig. *<br><br>-- | 1,4 | |
| A | <u>DE - A - 2 041 140</u> (BRAUN AG)<br>* Seite 1; Seite 2, zeilen 1-6 *<br><br>---- | 1,3 | |

| | RECHERCHIERTE SACHGEBIETE (Int. Cl.4) |
|---|---|
| | B 26 B 19/00 |

Der vorliegende Recherchenbericht wurde für alle Patentansprüche erstellt.

| Recherchenort | Abschlußdatum der Recherche | Prüfer |
|---|---|---|
| VIENNA | 05-02-1988 | BRÄUER |

KATEGORIE DER GENANNTEN DOKUMENTEN
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82